# EUROPÄISCHE PATENTSCHRIFT

(11) **EP 3 031 537 B1**
(45) Veröffentlichungstag und Bekanntmachung des Hinweises auf die Patenterteilung: **15.08.2018**
(21) Anmeldenummer: 15003420.5
(22) Anmeldetag: 01.12.2015
(51) Int. Cl.: B07B 1/46, B07B 13/16, A01D 33/08

(54) **SORTIERVORRICHTUNG FÜR KARTOFFELN O. DGL. ERNTEGUT**
SORTING DEVICE FOR POTATOES OR THE LIKE HARVESTED CROP
DISPOSITIF DE TRI DE POMMES DE TERRE OU AUTRE RECOLTE

(30) Priorität: 08.12.2014 DE 102014018017
(43) Veröffentlichungstag der Anmeldung: 15.06.2016
(73) Patentinhaber: Grimme Landmaschinenfabrik GmbH & Co. KG, 49401 Damme (DE)
(72) Erfinder: Müller, Fokke, 49356 Diepholz (DE)
(74) Vertreter: Pott, Ulrich

(56) Entgegenhaltungen:
- DE-A1- 2 840 427
- DE-A1-102004 045 487
- DE-U1-202010 006 744
- US-A- 667 168
- Bernd Herold ET AL: "Mechanische Beanspruchung von Kartoffeln beim Sortieren", Landtechnik 4/94, 30 April 1994 (1994-04-30), pages 230-231, XP055454210, Retrieved from the Internet: URL:https://www.landtechnik-online.eu/ojs- 2.4.5/index.php/landtechnik/article/view/1 994-4-230-231 [retrieved on 2018-02-26]

## Beschreibung

Die Erfindung betrifft eine Sortiervorrichtung für Kartoffeln, Zwiebeln o. dgl. Erntegut gemäß dem Oberbegriff des Anspruchs 1.

Sortiervorrichtungen in Form jeweiliger, als Siebmaschinen bezeichneter Kartoffelsortierer sind seit langem in der Landtechnik bekannt. Derartige Sortiervorrichtungen dienen der Größenaufteilung - dem sogenannten "Klassieren" - von für den Verkauf oder die Verarbeitung vorzubereitenden Kartoffeln. Dabei werden als allgemeine Größenklasse - für das in Form von Kartoffeln, Zwiebeln, rote Bete o. dgl. vorliegende Erntegut - sogenannte Quadratmaße definiert und diese als allgemein übliche Richtewerte beim Vergleich von Sortiermaßen der landwirtschaftlichen Produkte verwendet. Daraus abgeleitet ist eine in entsprechenden Vorrichtungen übliche Sortierung mittels einer "quadratische Lochkaliber" aufweisenden Sortierbaugruppe.

Aus DE 20 2010 006 744 U1 ist eine Sortiermaschine bekannt, bei der das Sortieren von Knollengewächsen auf dem Quadratmaß von austauschbaren Siebgittern einer rotierenden Sortiertrommel beruht.

Bei einer Vorrichtung zum Sortieren von Kartoffeln gemäß DE 28 40 427 A1 wird ein System nach Art einer sogenannten Riemensiebmaschine vorgeschlagen. Dabei sind mehrere, aus elastischen Strängen gebildete geschlossene Schleifen über parallelachsig angeordnete antreibbare Walzen gespannt und dabei so geführt, dass die Stränge zwischen zwei Walzen in Laufrichtung divergieren. Unterhalb dieser mit Riemen versehenen Schleifenkonstruktion sind jeweilige, die divergierenden Stränge kreuzende Querstäbe vorgesehen, die sich in Richtung der auf den Walzen umlaufenden Stränge mitbewegen, so dass hier die Möglichkeit besteht, die Querstäbe während der Mitbewegung in ihrem Abstand zu variieren. Damit wird ein kontinuierliches Sortierverfahren realisiert, bei dem sich zwischen den Längsriemen und den darunter befindlichen Querstäben ein als Größenklasse nutzbares Sortiermaß abweichend von üblichen Quadratmaßen ergibt. Dieses Sortiermaß ist jedoch trapezförmig geformt, so dass die Qualität der Sortierung nachteilig begrenzt ist und mehrere der Quadratmaße zu erfassen sind.

Gemäß einer Lösung in DE 84 16 567.7 U1 ist eine Sortiervorrichtung vorgeschlagen, die speziell auf eine Aussortierung von eine Übergröße aufweisenden Kartoffeln aus einer Schüttung gerichtet ist. Auch bei diesem System werden elastische Riemen genutzt, wobei diese parallel in Richtung des Erntegutstromes ausgerichtet sind. Diese jeweils nur in Querrichtung einstellbaren Riemen bilden jedoch kein - eine exakte Größenklasse definierendes - Quadratmaß, da dieses System lediglich die "spaltförmigen" Durchlassöffnungen entsprechend dem Abstand der parallelen Riemen zur Sortierung nutzt.

Gemäß US 5,697,451 wird eine mit Rollen versehene Siebstrecke vorgeschlagen, wobei der jeweilige Siebspalt zwischen glatten Rollen und profilierten Rollen veränderbar und damit zum Sortieren des zugeführten Gemisches nutzbar ist.

Aus DE 1 782 565 A ist eine Vorrichtung zum Sortieren bekannt, bei der ein nur quer zur Förderrichtung ausgerichtete Stäbe aufweisender Sortierrost genutzt wird. Dieser ist im Bereich seiner Sortierfläche mit zwei Gruppen von in eine geneigte Abstandslage zueinander verlagerbaren leiterförmig ausgebildeten Sprossen versehen. Diese wirken als jeweilige Querstäbe phasenweise in zwei gespreizten Ebenen zusammen, so dass die auseinanderstrebenden Querstäbe in Förderrichtung jeweilige separate "Querschlitze" bilden. Damit können durch entsprechende Einstellung in Querrichtung der Maschine in der Breite variierbare Durchlassspalte für das Sortiergut freigegeben werden. Ein die Größenklassen für das Sortiergut definierendes Quadratmaß wird bei dieser Vorrichtung ebenfalls nicht genutzt.

Eine Konstruktion mit einem Querstäbe aufweisenden Sortierband ist in DE 10 2004 045 487 A1 gezeigt, wobei ein inneres Band und ein äußeres Band in der Sortierstrecke verschiebbar übereinander angeordnet sind.

Auf dem Gebiet der Kartoffelsortierung sind weitere Sortierprinzipien seit langem allgemein bekannt, wobei insbesondere Zylindersiebmaschinen verwendet werden, die eine aus einem Drahtgeflecht - mit meist quadratischen Maschen - bestehende Siebflächen aufweisen. Diese Siebflächen können dabei die Mantelfläche eines liegenden, um seine Längsachse rotierenden Zylinders bilden. Ebenfalls bekannt sind Flachsiebmaschinen, die aus einem ebenen, meist ebenfalls aus Drahtgeflecht hergestellten Sieb mit quadratischen Maschen aufgebaut sind. Derartige Siebe können auswechselbar in schwingenden Siebrahmen übereinander, ggf. auch hintereinander, angeordnet werden.

Anwendung finden auch Vorrichtungen in Form von Profilwalzensiebmaschinen, wobei insbesondere gleichsinnig rotierende Gummiwalzen mit entsprechenden, Quadrat- oder Rundkaliber definierenden Profilausnehmungen vorgesehen sind. Eine derartige Konstruktion ist in DD 60212 gezeigt.

Neben den bereits erörterten Riemensiebmaschinen sind auch sogenannte Bandsiebmaschinen bekannt, wobei ebene und endlos umlaufende Maschenketten mit quadratischen Lochkalibern das jeweilige Quadratmaß einer Siebfläche definieren. Zu einer Variierung der Quadratmaße in dieser Siebmaschinen ist jedoch der Wechsel kompletter Maschenketten angezeigt, so dass ein erheblicher Aufwand entsteht.

Die Erfindung befasst sich mit dem Problem, eine Sortiervorrichtung für Erntegut zu schaffen, bei der mit geringem technischem Aufwand der Sortiervorgang verbessert werden kann, eine schnelle Einstellung variabel vorgebbarer Quadratmaße genauer ausführbar ist und damit eine Erhöhung der Sortierqualität möglich wird.

Ausgehend vom Oberbegriff des Anspruchs 1 wird diese Aufgabe durch die kennzeichnenden Merkmale des Anspruchs 1 gelöst. Weitere vorteilhafte Ausgestaltungen ergeben sich aus den Unteransprüchen 2 bis 17.

Bei Sortiervorrichtungen für Kartoffeln o. dgl. Erntegut wird dieses auf einen jeweilige Durchlassöffnungen aufweisenden Sortierbereich aufgebracht, wobei hier nach einem Quadratmaß definierbare und auch als Sortiermaß bezeichnete Durchlassklassen genutzt werden, um das Erntegutgemisch über den Sortierbereich weiterzufördern bzw. Einzelteile nach unten auszusortieren. Das erfindungsgemäße System weist in verbesserter Gestaltung der Sortierstrecke eine Funktionseinheit mit Zweifach-Stellmöglichkeit auf, derart, dass die Durchlassöffnungen im Bereich einer Gruppe von quer und einer Gruppe von längs zur Förderrichtung verlagerbaren Elementen auf ein jeweils vorgebbares Quadratmaß einstellbar sind. Erfindungsgemäß sind sämtliche Elemente des Sortierbereiches auf ein einheitliches Quadratmaß einstellbar. Damit wird ein variierbares Raster geschaffen, mit dem entlang des Sortierbereiches jeweils gleich große Durchlassöffnungen eine optimale Sortierfläche bilden. Die konstruktive Ausführung der entsprechenden Stellelemente im Bereich der Sortiervorrichtung sieht vor, dass die beiden Gruppen von einstellbaren Elementen wahlweise gleichzeitig oder nacheinander verstellt werden können. Ebenso ist denkbar, dass mittels konstruktiv anzupassender Baugruppen eine stufenlose oder gestufte Verstellung der beiden Elemente-Gruppen realisierbar ist. Ausgehend davon, dass die innerhalb der jeweiligen Gruppe vorgesehenen Elemente in unterschiedlich ausrichtbaren Gebrauchslagen an den Halte- und Führungsteilen des Systems festlegbar sind, ist vorgesehen, dass mit entsprechenden Einstellungen des Zwei-Gruppen-Systems auch variabel konturierbare Durchlassöffnungen erzeugbar sind. Insbesondere ist vorgesehen, dass die Durchlassöffnungen - ausgehend von der quadratischen Variante - auch mit rechteckige und/oder rautenförmige Konturen bildenden "Quadratmaßen" ausführbar sind. Nicht gemäß der Erfindung ist denkbar, dass mittels des Zwei-Gruppen-Systems trapezförmige Quadratmaße aufgebaut werden.

Dabei sind die beiden Gruppen mit den verstellbaren Elementen in zumindest zwei Stellebenen übereinander angeordnet, so dass unabhängige Verlagerungen möglich sind.

In vorteilhafter Ausführung der erfindungsgemäßen Vorrichtung sind bei dieser als verstellbare Elemente jeweilige Stab-Elemente vorgesehen. Denkbar ist jedoch auch, dass Riemen, Siebe, Ketten o. dgl. Teile als Elemente für die beiden Gruppen vorgesehen sind oder in den beiden Gruppen unterschiedliche Elemente kombiniert werden.

Die konstruktive Umsetzung der Bauteile ist darauf gerichtet, dass die quer zur Förderrichtung verlaufende Stab-Elemente aufweisende obere Gruppe mit einem Förderstabträger als antreibbare Baugruppe versehen ist, so dass das Erntegutgemisch durch einen entsprechenden Bewegungseintrag in einer vorgesehenen Förderrichtung verlagerbar und damit eine Sortierphase aktivierbar ist. Mit diesen verlagerbaren Stab-Elementen wirken die in Förderrichtung verlaufenden Stab-Elemente der unteren Gruppe so zusammen, dass die Durchlassöffnungen umfänglich begrenzt sind. Diese Stab-Elemente der unteren Gruppe können ihrerseits mittels eines verlagerbaren Stellstabträgers eingestellt werden.

Ausgehend von diesen beiden Möglichkeiten der "Horizontalverstellungen" ist denkbar, dass zumindest in Teilbereichen einer den Sortierbereich bildenden Sortierstrecke auch Änderungen des vertikalen Abstands zwischen Stellstabträger und Förderstabträger den Sortiervorgang verbessern und dazu zumindest einer der Träger vertikal einstellbar ausgeführt werden kann.

Eine effektive konstruktive Gestaltung des Stellstabträgers im Bereich der parallelen Stab-Elemente der unteren Gruppe sieht vor, dass hier eine zumindest eine Stützschere aufweisende Stellbaugruppe integriert wird. Mit Blick darauf, dass im Wesentlichen gleich große Stab-Elemente verwendet werden, ist in einer bevorzugten Ausführung des Stellstabträgers die Anordnung von zwei - jeweils seitlich parallel am Maschinenrahmen abgestützten - Stützscheren vorgesehen.

Bei dieser Scheren-Konstruktion werden die Stab-Elemente in jeweiligen Verbindungspunkten von beweglichen Schenkeln der Stützscheren gegenüberliegend gehalten, so dass die vorgesehene Parallelverschiebung der Stab-Elemente zur Veränderung der Durchlassöffnungen möglich ist. Zur Einleitung dieser Einstellbewegung ist vorgesehen, dass die Stab-Elemente mittels eines oder mehrerer an einem Ende der längs verlaufenden Stützscheren angreifenden Stellgliedes verschoben werden. Dabei werden die Stab-Elemente mittels der - in ihrer jeweiligen Winkellage veränderbaren - gelenkig verbundenen Schenkel gleichzeitig in variierbare Gebrauchslagen bewegt. Ausgehend von der an sich bekannten Stützscheren-Konstruktion ergibt sich, dass mittels der Schenkel-Verlagerungen die Stab-Elemente entsprechend aufeinander zu bzw. voneinander weg verschoben werden.

Die konstruktive Ausgestaltung des mit dem Stellstabträger bei der Dimensionierung der Durchlassöffnung zusammenwirkenden Förderstabträgers sieht vor, dass dessen den Transport des Erntegutes einleitende Stab-Elemente mit einer zumindest eine Förderkette aufweisenden Stellbaugruppe zusammenwirken. Da auch bei dieser Konstruktion vorzugsweise parallel beabstandete Stab-Elemente eingesetzt werden, weist der Förderstabträger als Stellbaugruppe zwei jeweils randseitig die parallelen Stab-Elemente erfassende Förderketten auf. Diese sind umlaufend im Maschinenrahmen der Vorrichtung aufgenommen und durch seitliche Führungen im Sortierbereich in einer im Wesentlichen waagerechten Förderlage bewegbar.

Die konstruktive Umsetzung der im Bereich der Förderketten wirksamen Stellbaugruppen sieht vor, dass diese jeweils mit einer vorzugsweise als Kurbel-Stell-Mechanik ausgebildeten, horizontal oder vertikal einsetzbaren Linearverstellung versehen sind. Dabei sind neben einer bevorzugten Handverstellung des Systems weitgehend beliebige Ausführungen von motorischen Antrieben denkbar. Diese Stellmechanik weist dabei einen mit der jeweiligen Förderkette in seitlichen Kontakt bringbaren Hubbalken auf. Dieser wirkt mit jeweiligen, von den Kettengliedern seitlich abragenden Hubansätzen zusammen. Durch eine Anhub- bzw. Absenkverstellung des Hubbalkens werden diese Kettenglieder erfasst, so dass entsprechend diesem Stellweg gleichzeitig die parallelen Stab-Elemente in die vorgesehene Abstandslage horizontal verschoben werden und damit die Beeinflussung des Quadratmaßes möglich ist.

In zweckmäßiger Ausführung ist vorgesehen, dass die im Bereich des Förderstabträgers und des Stellstabträgers vorgesehenen Verlagerungen der jeweiligen Stab-Elemente auch während des Betriebs der Sortiervorrichtung möglich sind, so dass damit eine kontinuierliche Einstellung der Quadratmaße möglich ist. Ebenso ist denkbar, dass im Bereich der von Hand zu betätigenden Stell-Mechanik im Bereich des Förderstabträgers eine motorische Einheit vorgesehen wird. Diese motorische Verstellung ist vorteilhaft auch im Bereich der Stützscheren vorgesehen, wobei diese an Stelle einer Kurbel-Verstellung vorzugsweise mit einem hydraulischen oder pneumatischen Stellzylinder zusammenwirken können.

Eine weitere Ausgestaltung der erfindungsgemäßen Sortiervorrichtung sieht vor, dass in das die Quadratmaße als Sortieröffnungen aufweisende System ein fluidischer Zusatzförderer mit dem Sortierbereich von unten zugeordnetem Druckmedium integriert wird. Dabei ist vorgesehen, dass mit diesem Zusatzförderer zumindest das nahe dem jeweiligen Quadratmaß der Durchlassöffnung befindliche Erntegut durch ein Fluid als Leitmedium beeinflusst wird. In zweckmäßiger Ausführung ist als fluidischer Zusatzförderer eine Druckluftvorrichtung in das System integriert. Mit dieser Druckluftvorrichtung können eine oder mehrere Ausleitdüsen versehen sein, die unterhalb des Sortierbereiches mit einer nach oben gerichteten Ausströmrichtung angeordnet sind. Damit wird ein insbesondere nach oben gerichteter Fluiddruck so aufgebaut, dass in den Durchlassöffnungen haftendes Erntegut oder jeweilige Gemischteile abhebbar sind und damit der Sortiervorgang effizient beeinflusst werden kann. Dabei werden insbesondere jeweilige ungleichmäßige, von einer Kugelform abweichende Knollen-Teile so angehoben bzw. verschoben, dass in den das Quadratmaß aufweisenden Durchlässen der jeweils kleinste Knollen-Durchmesser zur Sortierung führt.

Eine weitere Ausgestaltung des Systems sieht vor, dass mehrere der in Förderrichtung eine Reihenanordnung bildenden Sortiervorrichtungen zu einer Funktionseinheit so zusammengefasst werden, dass - beispielsweise ausgehend von einem Sortierbereich mit kleine Quadratmaße aufweisenden Durchlassöffnungen - eine zunehmende Vergrößerung der einstellbaren Quadratmaße auf den nachgeordneten Einheiten vorgesehen ist und damit am Ende der Reihenanordnung eine optimale und vollständige Gemischsortierung entsprechend vorgesehener Durchlassklassen erreicht wird.

Weitere Einzelheiten und vorteilhafte Ausgestaltungen der Erfindung ergeben sich aus der nachfolgenden Beschreibung und der Zeichnung, in der ein Ausführungsbeispiel der erfindungsgemäßen Sortiervorrichtung veranschaulicht ist. In der Zeichnung zeigen:
- Fig. 1: eine perspektivische Gesamtansicht der erfindungsgemäßen Vorrichtung mit zwei Gruppen von sich kreuzenden Elementen im Sortierbereich,
- Fig. 2: eine Draufsicht der Vorrichtung gemäß Fig. 1,
- Fig. 3: eine teilweise geschnittene Seitenansicht der Vorrichtung gemäß einer Linie III-III in Fig. 4,
- Fig. 4 und Fig. 5: jeweilige unterschiedliche Quadratmaße im Bereich der Durchlassöffnungen aufweisende Draufsichten von Sortierbereichen,
- Fig. 6: eine vergrößerte Ausschnittsdarstellung im Bereich einer Stellbaugruppe für den oberen Förderstabträger,
- Fig. 7: eine Seitenansicht der beiden Stellbaugruppen im Bereich von Förderstabträger und Stellstabträger, und
- Fig. 8: eine Aneinanderreihung mehrerer der erfindungsgemäßen Sortiervorrichtungen als mehrstufige Funktionseinheit.

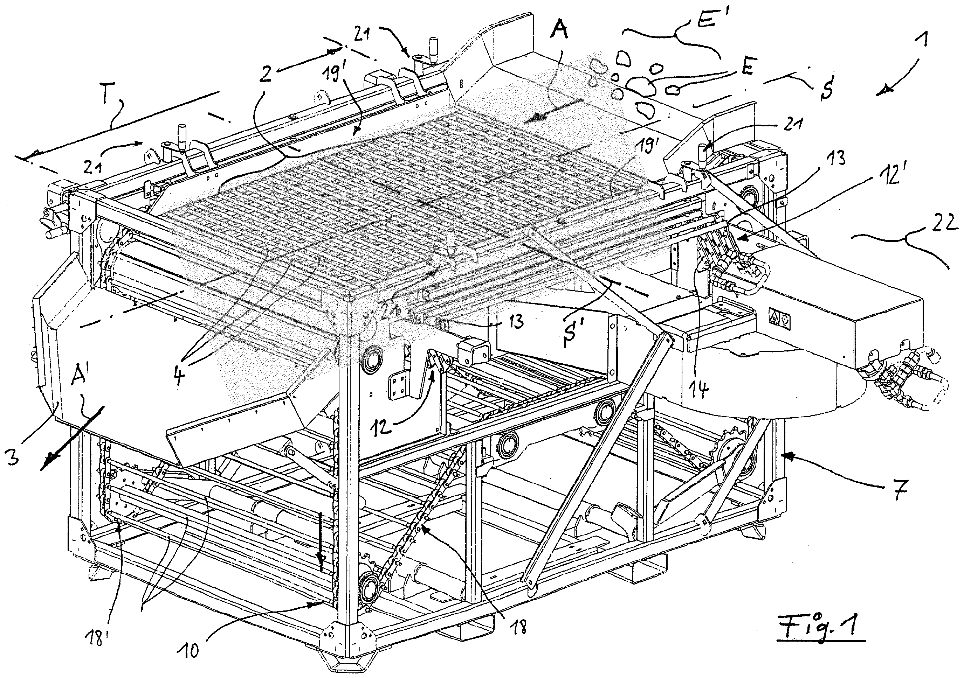

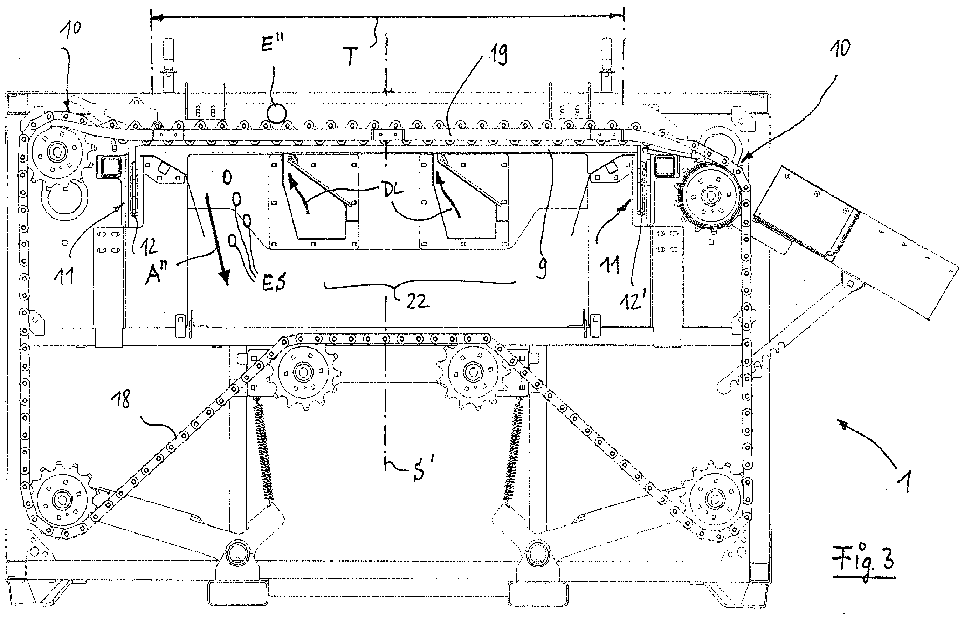

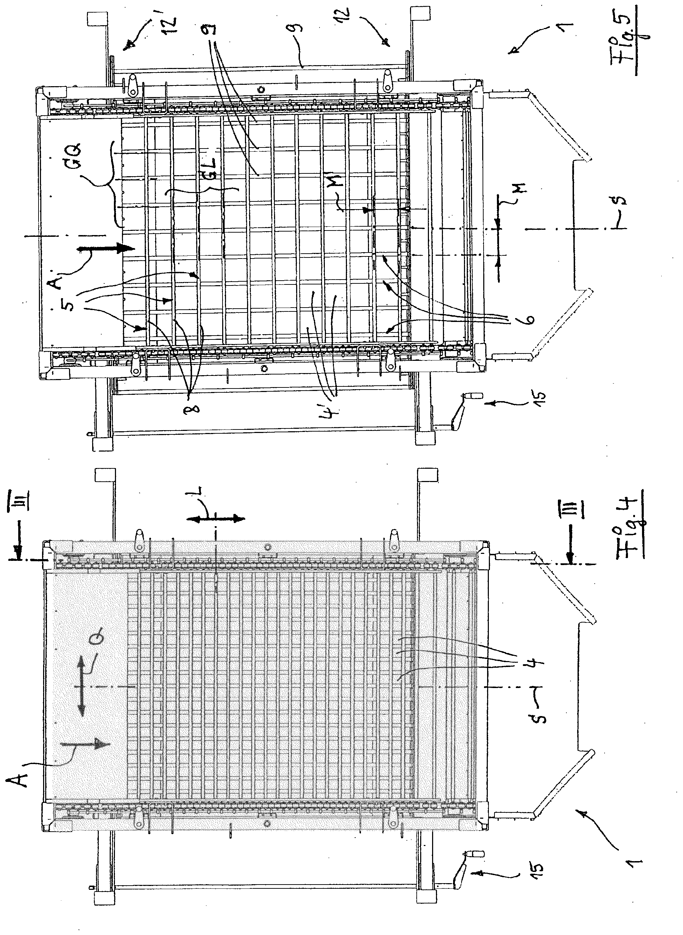

In Fig. 1 ist eine insgesamt mit 1 bezeichnete Sortiervorrichtung für Kartoffeln, Zwiebeln o. dgl. Erntegut E in einer Perspektivdarstellung veranschaulicht. Auf diese Vorrichtung 1 wird ein Erntegutgemisch E' in Förderrichtung A auf einen Sortierbereich 2 aufgebracht. Dieses Erntegutgemisch E' wird bei Verlagerung in Förderrichtung A entlang dem Sortierbereich 2 bewegt und auf einer variabel zu bemessenden Sortierstrecke T zum Abförderteil 3 hin (Ableitrichtung A') bewegt. Damit kann eine Sortierung in zumindest zwei Fraktionen erreicht werden. Für diese Fraktionierung sind in dem mit 2 bezeichneten Sortierbereich jeweilige variabel zu bemessende Durchlassöffnungen 4, 4' (Fig. 4, Fig. 5) nutzbar. Diese können auf jeweilige, in der Landtechnik als Sortier- oder Quadratmaß M-M' (Fig. 4, Fig. 5) definierte Durchlassklassen für das Erntegut E eingestellt werden, so dass unterhalb der Sortierstrecke T das mittels des Quadratmaßes M-M' sortierte Erntegut ES abgeleitet wird (Pfeil A", Fig. 3).

Ausgehend von dieser prinzipiell bekannten Einstellbarkeit des Quadratmaßes M-M' zeichnet sich das erfindungsgemäße Konzept der Sortiervorrichtung 1 dadurch aus, dass die Durchlassöffnungen 4, 4' zumindest mit einer Gruppe GQ von quer und einer Gruppe GL von längs zur Förderrichtung A verlagerbaren Elementen 5, 6 (Fig. 5) versehen ist und diese Elemente 5, 6 auf zumindest ein vorgebbares Quadratmaß M-M' einstellbar sind.

Aus einem Vergleich der Darstellungen gemäß Fig. 4 und Fig. 5 wird mit jeweiligen Bewegungspfeilen Q (für die Querverstellung) und L (für die Längsverstellung) deutlich, dass insbesondere sämtliche der Elemente 5, 6 des jeweiligen Sortierbereiches 2 auf ein einheitliches Quadratmaß M-M' einstellbar sind. Damit wird erreicht, dass entlang des Sortierbereiches 2 vorzugsweise eine Fläche mit gleich großen Durchlassöffnungen 4, 4' definierbar ist.

Das konstruktive Konzept der Sortiervorrichtung 1 sieht vor, dass die beiden Gruppen GQ mit verstellbaren Elementen 6 und GL mit verstellbaren Elementen 5 gleichzeitig oder nacheinander verstellbar im System geführt sind. Damit wird eine konstruktive Vielfalt von Stellmöglichkeiten eröffnet. Das Zwei-Gruppen-Konzept der Sortiervorrichtung 1 sieht vor, dass unabhängig von der dargestellten Ausführungsform - mit den senkrecht zueinander verstellbaren und die quadratische Ausbildung der Kontur des Quadratmaßes M-M' bewirkenden Elementen 5, 6 - auch davon abweichende Konturen denkbar sind. Durch entsprechende "Schrägstellung" der Elemente können rautenförmige Konturen erreicht werden, oder es werden rechteckige Konturen mit unterschiedlichen Stellwegen gemäß Pfeil Q oder L erzeugt (jeweils nicht dargestellt). Ebenso ist denkbar, ein System mit Zwei-Gruppen-Konzept so aufzubauen, dass ein Quadratmaß M-M' mit einer trapezförmigen Kontur einstellbar ist.

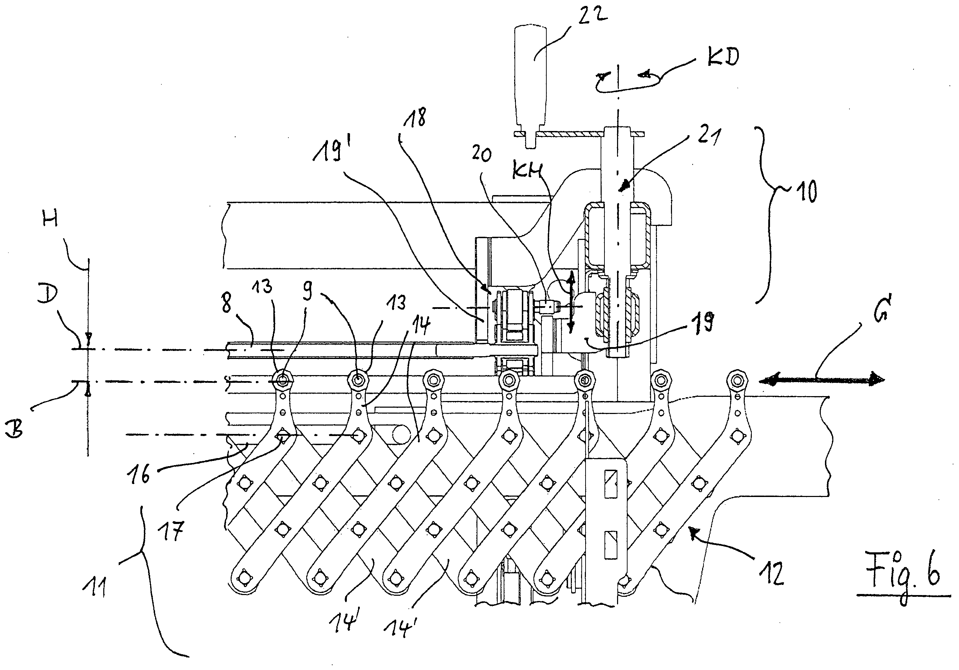

Die auf einem kompakten Maschinenrahmen 7 basierende Ausführung der Sortiervorrichtung 1 sieht vor, dass die Gruppen GQ und GL mit verstellbaren Elementen 5, 6 in zumindest zwei Stellebenen B und D (Fig. 6) übereinander mit einem Höhenabstand H angeordnet sind. Dabei ist prinzipiell denkbar, dass dieser Höhenabstand H ebenfalls als variable Stellgröße in das System integriert werden kann (nicht dargestellt).

Eine optimale Ausführung der allgemein dargestellten Elemente 5, 6 sieht vor, dass diese vorzugsweise als Stab-Elemente 8, 9 ausgebildet werden. Ebenso ist denkbar, diese verstellbaren Elemente auch in Form von Riemen, Ketten, Sieben o. dgl. Teilekombinationen auszuführen (nicht dargestellt).

Ausgehend von dieser konkreten Ausführungsform im Bereich der Sortiervorrichtung 1 ist vorgesehen, dass die längs der Förderrichtung A verlagerbare Stab-Elemente 8 aufweisende obere Gruppe GL mit einem allgemein mit 10 bezeichneten Förderstabträger versehen ist. Diesem Förderstabträger 10 ist im Bereich der Sortierstrecke T (Fig. 3) ein Stellstabträger 11 zugeordnet, der mit den in Förderrichtung A verlaufenden Stab-Elementen 9 (Fig. 6) der unteren Gruppe GQ zusammenwirkt.

Dabei sieht das Konzept vor, dass zumindest in Teilbereichen der den Sortierbereich 2 bildenden Sortierstrecke T auch der vertikale Abstand H zwischen Stellstabträger 11 und Förderstabträger 10 einstellbar ausgeführt sein kann.

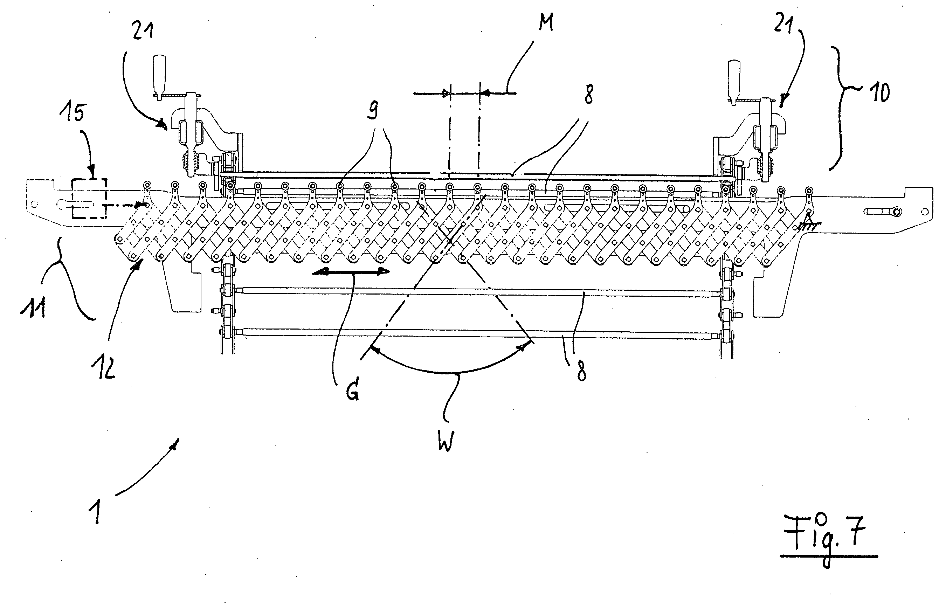

Die konstruktive Umsetzung des Stellstabträgers 11 sieht vor, dass dieser im Bereich der parallelen Stab-Elemente 9 mit einer zumindest eine Stützschere 12 aufweisenden Stellbaugruppe versehen ist (Fig. 6, Fig. 7). In zweckmäßiger Ausführung - und mit Blick auf die zur Quermittelebene S' des Sortierbereiches 2 weitgehend symmetrische Konstruktion - ist vorgesehen, dass die Stellbaugruppe zwei seitlich parallel am Maschinenrahmen 7 vorgesehene Stützscheren 12, 12' aufweist (Fig. 3).

Die Ausgestaltung dieser Stützscheren-Konstruktion sieht vor, dass die Stab-Elemente 9 in jeweiligen Verbindungspunkten 13' von Schenkeln 14 der Stützscheren 12 gegenüberliegend gehalten sind. Dabei sind jeweilige sich kreuzende Schenkel 14, 14' (Fig. 6) mittels eines an einem Ende der längs veragerbaren Stützschere 12 angreifenden Stellgliedes 15 in variierbare Gebrauchslagen verlagerbar (Pfeil G, Fig. 7). Dabei sind die Schenkel 14, 14' sämtlich so bewegbar, dass diese als jeweilige Spreizstellung mit variierbarem Winkel W die einstellbaren Abstände M bewirken. Für diese Winkelverstellung W - die die Elemente 9 aufeinander zu oder voneinander weg bewegt - sind im Bereich der kreuzweise aneinander liegenden Schenkel 14, 14' entsprechende Verbindungspunkte 13 gelenkig ausgeführt.

In Längsrichtung G sind die Stab-Elemente 9 im Bereich einer Nut 16 mittels jeweiliger Führungsstifte 17 geführt (Fig. 6), so dass die Verlagerung in der horizontalen Ebene B gesichert ist. Damit wird eine Konstruktion geschaffen, die mit geringem technischem Aufwand eine Einstellung der Systemkomponenten zur Quer-Verlagerung GQ ermöglicht.

Der in das System integrierte Förderstabträger 10 ist im Bereich seiner Stab-Elemente 8 mit einer zumindest eine Förderkette 18 aufweisenden Stellbaugruppe versehen. Auch hier sieht die Konstruktion vor, dass der in Förderrichtung A umlaufende Förderstabträger 10 zweckmäßigerweise zwei randseitig die parallelen Stab-Elemente 8 erfassende Förderketten 18, 18' (Fig. 1) aufweist.

Aus der Darstellung gemäß Fig. 6 wird deutlich, dass die Stellbaugruppe im Bereich der jeweiligen Förderkette 18, 18' mit einer einen seitlichen Hubbalken 19 und jeweilige Hubansätze 20 aufweisenden Kurbel-Stell-Mechanik 21 versehen ist (Drehbewegung gemäß Pfeil KD). In diesem Bereich ist durch eine vorteilhafte Handbedienung eine - auch im Sortierbetrieb der Vorrichtung realisierbare - Einstellung möglich. Bei Betätigung einer Handkurbel 22 wird die Stell-Mechanik 21 so verlagert, dass die Hubansätze 20 die Förderkette 18 in einer Pfeilrichtung KH nach oben bzw. nach unten verlagern. Damit werden die Ketten 18, 18' entsprechend "abgesenkt" und damit das Maß M' vergrößert (Fig. 5) oder "angehoben" und das Maß M' verringert (Fig. 4).

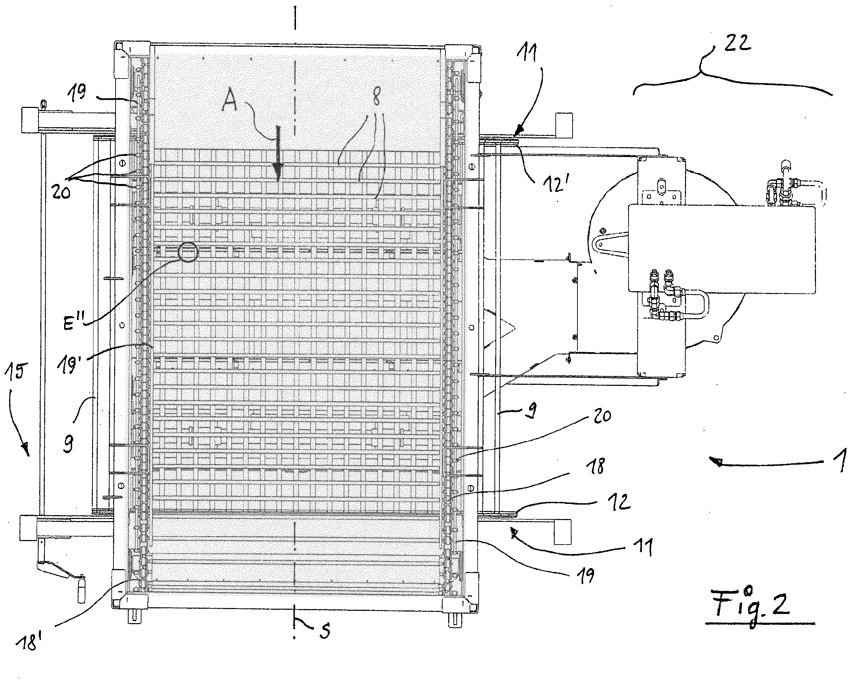

Aus Fig. 1 und Fig. 2 wird in Zusammenschau deutlich, dass im Bereich der Kette 18 ein zur Förderstrecke gerichteter Niederhalter 19' vorgesehen ist, der mit den Hubansätzen 20 zusammenwirkt und einen Seitenschutz entlang der Sortierstrecke 2 bildet.

Eine weitere Ausgestaltung des Systems sieht vor, dass dieses mit zumindest einem fluidischen Zusatzförderer 22 versehen wird (Fig. 1, Fig. 2). Dieser insbesondere mit Druckluft DL arbeitende Zusatzförderer 22 wird so angeordnet, dass zumindest die nahe dem Quadratmaß M-M' der Durchlassöffnungen 4, 4' an der Oberseite der Sortierstrecke L befindlichen Gemischteile E" (Fig. 3) durch erhöhten Luftdruck als Leitmedium beeinflussbar sind. Damit können insbesondere Verstopfungen im Bereich der Durchlassöffnungen 4, 4' vermieden und das Gemisch E aufgelockert werden, derart, dass die Sortierqualität der Vorrichtung 1 insgesamt verbessert ist. Denkbar ist auch, dass an Stelle der Druckluftvorrichtung 22 ein mit Flüssigkeit arbeitendes System aufgebaut wird (nicht dargestellt).

Mittels des Druckkraft-Zusatzförderers 22 werden die einzelnen Knollen in einer Hubrichtung nach oben verlagert, so dass zusätzliche Schub- und Rollbewegungen entstehen. Dabei werden jeweilige, durch das Quadratmaß M-M' hindurchpassende Knollenteile mit von der Kugelgestalt abweichenden Abmessungen so in Übereinanderlage mit den Öffnungen 4, 4' gebracht, dass diese Knollen ebenfalls aussortiert werden. Damit ist die Leistungsfähigkeit der Vorrichtung 1 mittels des Zusatzförderers 22 weiter zu verbessern.

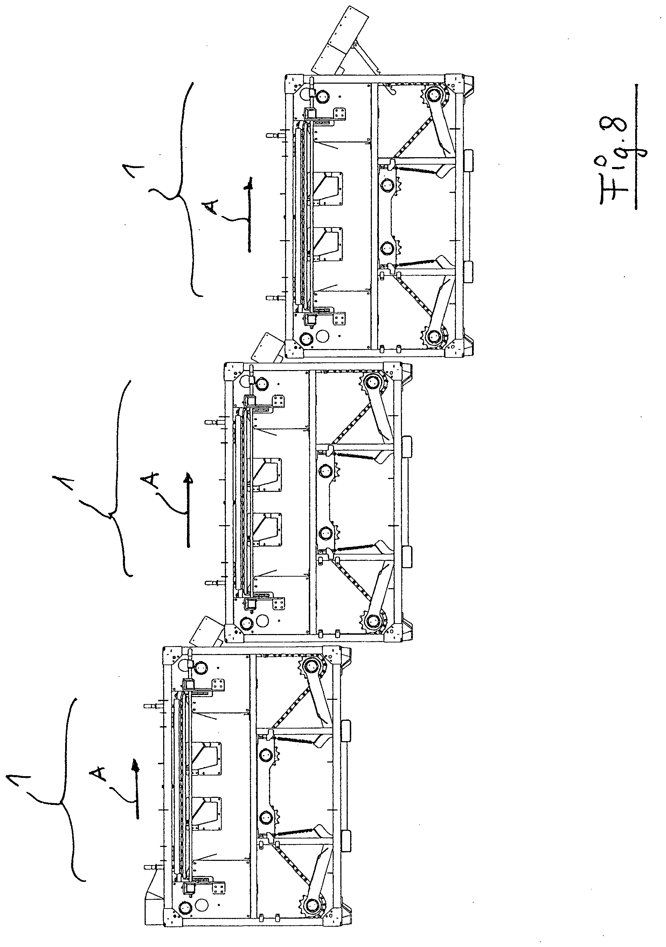

Aus der Darstellung gemäß Fig. 8 wird eine weitere Ausgestaltung des Sortier-Systems deutlich. Bei dieser Anordnung sind beispielhaft drei der Sortiervorrichtungen 1 in Förderrichtung A so ausgerichtet, dass diese eine Reihenanordnung bilden. Damit können die Sortiervorrichtungen 1 als eine Funktionseinheit zusammenwirken, so dass damit mehrere gestufte Durchlassklassen mit entsprechend eingestellten Quadratmaßen M-M' auf das bewegte Erntegut E einwirken und dieses vollständig fraktioniert werden kann.

## Patentansprüche

1. Sortiervorrichtung für Kartoffeln o. dgl. Erntegut, wobei auf deren Sortierbereich (2) ein Erntegutgemisch (E) aufgebracht und dieses bei Verlagerung in Förderrichtung (A) in zumindest zwei Fraktionen sortiert wird, derart, dass im Sortierbereich (2) jeweilige Durchlassöffnungen (4, 4') nutzbar sind, die auf jeweilige, in der Landtechnik als Quadratmaß (M-M') bezeichnete und ein Sortiermaß definierende Durchlassklassen für das Erntegut (E) einstellbar sind, wobei die Durchlassöffnungen (4, 4') zumindest mit einer Gruppe (GQ) von quer und einer Gruppe (GL) von längs zur Förderrichtung (A) verlagerbaren Elementen (5, 6) auf zumindest ein vorgebbares Quadratmaß (M-M') einstellbar sind (Q, L), **dadurch gekennzeichnet, dass** sämtliche der Elemente (5, 6) des Sortierbereiches (2) auf ein einheitliches Quadratmaß (M-M') einstellbar sind, derart, dass entlang des Sortierbereiches (2) nach einer stufenlosen oder gestuften Verstellung der beiden Gruppen (GQ, GL) gleich große Durchlassöffnungen (4, 4') nutzbar sind.

2. Sortiervorrichtung nach Anspruch 1, **dadurch gekennzeichnet, dass** die beiden Gruppen (GQ, GL) von einstellbaren Elementen (5, 6) gleichzeitig oder nacheinander verstellbar sind.

3. Sortiervorrichtung nach Anspruch 1 oder 2, **dadurch gekennzeichnet, dass** die Durchlassöffnungen (4, 4') wahlweise mit jeweils quadratische, rechteckige oder rautenförmige Kontur aufweisenden Quadratmaßen (M-M') versehen sind.

4. Sortiervorrichtung nach einem der Ansprüche 1 bis 3, **dadurch gekennzeichnet, dass** die Gruppen (GQ, GL) mit verstellbaren Elementen (5, 6) in zumindest zwei Stellebenen (D, B) übereinander mit einem Höhenabstand (H) angeordnet sind.

5. Sortiervorrichtung nach einem der Ansprüche 1 bis 4, **dadurch gekennzeichnet, dass** als verstellbare Elemente (5, 6) jeweilige Stäbe (8), Riemen, Siebe, Ketten o. dgl. Teile vorgesehen sind.

6. Sortiervorrichtung nach Anspruch 5, **dadurch gekennzeichnet, dass** die quer zur Förderrichtung (A) verlaufende Stab-Elemente (8) aufweisende obere Gruppe (GL) mit einem Förderstabträger (10) als antreibbare Baugruppe versehen ist und die parallel in Förderrichtung (A) verlaufende Stab-Elemente (9) aufweisende untere Gruppe (GQ) mit einem Stellstabträger (11) zusammenwirkt.

7. Sortiervorrichtung nach Anspruch 6, **dadurch gekennzeichnet, dass** zumindest in Teilbereichen einer den Sortierbereich (2) bildenden Sortierstrecke (T) der vertikale Abstand (H) zwischen Stellstabträger (11) und Förderstabträger (10) einstellbar ist.

8. Sortiervorrichtung nach Anspruch 6 oder 7, **dadurch gekennzeichnet, dass** der Stellstabträger (11) im Bereich der parallelen Stab-Elemente (9) mit einer zumindest eine Stützschere (12) aufweisenden Stellbaugruppe versehen ist.

9. Sortiervorrichtung nach Anspruch 8, **dadurch gekennzeichnet, dass** die Stellbaugruppe zwei seitlich parallel der Maschinenquerachse (S') am Maschinenrahmen (7) vorgesehene Stützscheren (12, 12') aufweist.

10. Sortiervorrichtung nach Anspruch 8 oder 9, **dadurch gekennzeichnet, dass** die Stab-Elemente (9) in jeweiligen Verbindungspunkten (13') von Schenkeln (14, 14') der Stützscheren (12, 12') gegenüberliegend gehalten sind und dabei die Stab-Elemente (9) mittels eines an einem Ende der längs verlaufenden Stützschere (12, 12') angreifenden Stellgliedes (15) in variierbare Gebrauchslagen verlagerbar sind.

11. Sortiervorrichtung nach Anspruch 6, **dadurch gekennzeichnet, dass** die Stab-Elemente (8) des Förderstabträgers (10) mit einer zumindest eine Förderkette (18) aufweisenden Stellbaugruppe zusammenwirken.

12. Sortiervorrichtung nach Anspruch 10, **dadurch gekennzeichnet, dass** die Stellbaugruppe zwei randseitig die parallelen Stab-Elemente (8) erfassende Förderketten (18, 18') aufweist.

13. Sortiervorrichtung nach Anspruch 11 oder 12, **dadurch gekennzeichnet, dass** die Stellbaugruppe im Bereich der beiden Förderketten (18, 18') jeweils zumindest eine einen seitlichen Hubbalken (19) und jeweilige Hubansätze (20) aufweisende Kurbel-Stell-Mechanik (21) aufweist.

14. Sortiervorrichtung nach einem der Ansprüche 1 bis 13, **dadurch gekennzeichnet, dass** in das System ein fluidischer Zusatzförderer (22) integriert ist, derart, dass zumindest die nahe dem Quadratmaß (M-M') der Durchlassöffnungen (4, 4') befindlichen Gemischteile (E") durch ein Fluid als Leitmedium beeinflussbar sind.

15. Sortiervorrichtung nach Anspruch 14, **dadurch gekennzeichnet, dass** als fluidischer Zusatzförderer (22) eine Druckluftvorrichtung vorgesehen ist.

16. Sortiervorrichtung nach einem der Ansprüche 1 bis 15, **dadurch gekennzeichnet, dass** mehrere der in Förderrichtung (A) eine Reihenanordnung bildenden Sortiervorrichtungen (1) als eine Funktionseinheit zusammenwirken.

## Claims

1. Sorting apparatus for potatoes or similar harvested crops, a harvested-crop mixture (E) being placed on the sorting region (2) of said apparatus and said harvested-crop mixture being sorted into at least two fractions when moved in the conveying direction (A), such that respective passage openings (4, 4') can be used in the sorting region (2), which openings can be set to respective passage categories for the harvested crop (E) that are referred to in agriculture as the square mesh size (M-M') and that define a sorting size, it being possible to set (Q, L) the passage openings (4, 4') to at least one predeterminable square mesh size (M-M') at least by means of a group (GQ) of elements (5, 6) that are transversely movable with respect to the conveying direction (A), and a group (GL) of said elements that are longitudinally movable with respect to said conveying direction, **characterised in that** all of the elements (5, 6) of the sorting region (2) can be set to a uniform square mesh size (M-M') such that, along the sorting region (2), passage openings (4, 4') of the same size can be used after continuous or stepped adjustment of the two groups (GQ, GL).

2. Sorting apparatus according to claim 1, **characterised in that** the two groups (GQ, GL) of adjustable elements (5, 6) can be adjusted simultaneously or in succession.

3. Sorting apparatus according to either claim 1 or claim 2, **characterised in that** the passage openings (4, 4') are selectively provided in each case with square mesh sizes (M-M') having a square, rectangular or rhombic outline.

4. Sorting apparatus according to any of claims 1 to 3, **characterised in that** the groups (GQ, GL) comprising adjustable elements (5, 6) are arranged one above the other in at least two adjustment planes (D, B) and so as to have a vertical spacing (H).

5. Sorting apparatus according to any of claims 1 to 4, **characterised in that** respective rods (8), belts, sieves, chains or similar components are provided as the adjustable elements (5, 6).

6. Sorting apparatus according to claim 5, **characterised in that** the upper group (GL) comprising rod elements (8) extending transversely to the conveying direction (A) is provided with a conveying rod support (10) as a drivable assembly, and the lower group (GQ) comprising rod elements (9) extending in parallel in the conveying direction (A) cooperates with an adjustment rod support (11).

7. Sorting apparatus according to claim 6, **characterised in that** the vertical spacing (H) between the adjustment rod support (11) and the conveying rod support (10) can be adjusted at least in portions of a sorting path (T) forming the sorting region (2).

8. Sorting apparatus according to either claim 6 or claim 7, **characterised in that** the adjustment rod support (11) is provided with an adjustment assembly comprising at least one scissor support (12) in the region of the parallel rod elements (9).

9. Sorting apparatus according to claim 8, **characterised in that** the adjustment assembly comprises two scissor supports (12, 12') that are provided on the sides of the machine frame (7) in parallel with the transverse axis (S') of the machine.

10. Sorting apparatus according to either claim 8 or claim 9, **characterised in that** the rod elements (9) are held at respective connection points (13') by legs (14, 14') of the scissor supports (12, 12') so as to be opposite one another and, at the same time, the rod elements (9) can be moved into variable use positions by means of an actuator (15) that engages on an end of the longitudinally extending scissor support (12, 12').

11. Sorting apparatus according to claim 6, **characterised in that** the rod elements (8) of the conveying rod support (10) cooperate with an adjustment assembly comprising at least one conveying chain (18).

12. Sorting apparatus according to claim 10, **characterised in that** the adjustment assembly comprises two conveying chains (18, 18') that grip the parallel rod elements (8) at the edges thereof.

13. Sorting apparatus according to either claim 11 or claim 12, **characterised in that** the adjustment assembly, in the region of each of the two conveying chains (18, 18'), comprises at least one crank adjustment mechanism (21) comprising a lateral lifting beam (19) and corresponding lifting projections (20).

14. Sorting apparatus according to any of claims 1 to 13, **characterised in that** a supplementary fluid conveyor (22) is integrated in the system such that at least the mixture portions (E") located near the square mesh (M-M') of the passage openings (4, 4') can be influenced by a fluid that acts as a conveying medium.

15. Sorting apparatus according to claim 14, **characterised in that** a pneumatic apparatus is provided as the supplementary fluid conveyor (22).

16. Sorting apparatus according to any of claims 1 to 15, **characterised in that** a plurality of sorting apparatuses (1) arranged in series in the conveying direction (A) cooperate with one another as a functional unit.

## Revendications

1. Dispositif de tri de pommes de terre ou de produits de récolte analogue, un mélange de produits de récolte (E) étant déposé sur la zone de tri (2) et ce mélange de produits de récolte étant classé en au moins deux fractions lors du déplacement dans la direction de transport (A) de telle sorte que des ouvertures de passage respectives (4, 4') peuvent être utilisées dans la zone de tri (2), lesquelles ouvertures de passage peuvent être réglées en classes de passage de produits de récolte (E) désignées par calibre (M-M') en agriculture et définissant une dimension de tri, les ouvertures de passage (4, 4') peuvent être réglées (Q-L) à au moins un calibre prédéterminable (M-M') au moins avec un groupe (GQ) d'éléments (5, 6) déplaçables transversalement, et un groupe (GL) déplaçable longitudinalement, à la direction de transport (a), **caractérisé en ce que** l'ensemble des éléments (5, 6) de la zone de tri (2) peut être réglé à un calibre uniforme (M-M') de sorte que des ouvertures de passage (4, 4') de même dimension peuvent utilisées le long de la zone de tri (2) après un déplacement continu ou étagé des deux groupes (GQ, GL).

2. Dispositif de tri selon la revendication 1, **caractérisé en ce que** les deux groupes (GQ, GL) d'éléments réglables (5, 6) sont réglables simultanément ou successivement.

3. Dispositif de tri selon la revendication 1 ou 2, **caractérisé en ce que** les ouvertures de passage (4, 4') sont pourvues au choix de calibres (M-M') présentant un contour carré, rectangulaire ou en losange.

4. Dispositif de tri selon l'une des revendications 1 à 3, **caractérisé en ce que** les groupes (GQ, GL) munis d'éléments réglables (5, 6) sont disposés l'un sur l'autre à une distance verticale (H) sur au moins deux niveaux de réglage (D, B).

5. Dispositif de tri selon l'une des revendications 1 à 4, **caractérisé en ce que** les éléments réglables (5, 6) prévus sont des tiges (8), des courroies, des tamis, des chaînes des pièces similaires respectifs.

6. Dispositif de tri selon la revendication 5, **caractérisé en ce que** le groupe supérieur (GL), comportant des éléments formant tige (8) qui s'étendent transversalement à la direction de transport (A), est pourvu d'un support de tige de transport (10) se présentant sous la forme d'un module entraînable et le groupe inférieur (GQ), comportant des éléments formant tiges (9) qui s'étendent en parallèle dans la direction de transport (A), coopère avec un support de tiges réglable (11).

7. Dispositif de tri selon la revendication 6, **caractérisé en ce que** la distance verticale (H) entre le support de tige réglable (11) et le support de tige de transport (10) est réglable au moins dans des zones partielles d'une section de tri (T) formant la zone de tri (2).

8. Dispositif de tri selon la revendication 6 ou 7, **caractérisé en ce que** le support de tiges réglable (11) est pourvu, au niveau des éléments formant tiges parallèles (9), d'un module de réglage comportant au moins un quadrilatère articulé de support (12).

9. Dispositif de tri selon la revendication 8, **caractérisé en ce que** le module de réglage comprend deux quadrilatères articulés de support (12, 12') prévus latéralement et parallèlement à l'axe transversal (S') de la machine au niveau du bâti de machine (7).

10. Dispositif de tri selon la revendication 8 ou 9, **caractérisé en ce que** les éléments formant tiges (9) sont montés les uns en face des autres dans des points de liaison respectifs (13') de branches (14, 14') des quadrilatères articulés de support (12, 12') et les éléments formant tiges (9) peuvent alors être déplacés dans des positions d'utilisation variables au moyen d'un actionneur (15) s'engageant sur une extrémité du quadrilatère articulé de support (12, 12') s'étendant longitudinalement.

11. Dispositif de tri selon la revendication 6, **caractérisé en ce que** les éléments formant tiges (8) du support de tige de transport (10) coopèrent avec un module de réglage comportant au moins une chaîne de transport (18).

12. Dispositif de tri selon la revendication 10, **caractérisé en ce que** le module de réglage comporte deux chaînes de transport (18, 18') qui détectent du côté des bords les éléments formant tiges parallèles (8).

13. Dispositif de tri selon la revendication 11 ou 12, **caractérisé en ce que** le module de réglage comporte au niveau de chacune des deux chaînes de transport (18, 18') au moins un mécanisme d'actionnement de manivelle (21) comportant une poutre de levage latérale (19) et des appendices de levage respectifs (20).

14. Dispositif de tri selon l'une des revendications 1 à 13, **caractérisé en ce qu'**un convoyeur fluidique supplémentaire (22) est intégré dans le système de telle sorte qu'au moins les éléments de mélange (E"), situés à proximité du calibre (M-M') des ouvertures de passage (4, 4'), peuvent être influencés par un fluide servant de milieu de guidage.

15. Dispositif de tri selon la revendication 14, **caractérisé en ce qu'**un dispositif à air comprimé est prévu comme convoyeur fluidique supplémentaire (22).

16. Dispositif de tri selon l'une des revendications 1 à 15, **caractérisé en ce qu'**une pluralité de dispositifs de tri (1), formant un agencement en série dans la direction de transport (A), coopèrent en tant qu'unité fonctionnelle.
